(19) Europäisches Patentamt / European Patent Office / Office européen des brevets

(11) **EP 4 024 290 A1**

(12) **EUROPEAN PATENT APPLICATION**

(43) Date of publication:
**06.07.2022 Bulletin 2022/27**

(21) Application number: **22150119.0**

(22) Date of filing: **04.01.2022**

(51) International Patent Classification (IPC):
**G06N 3/063** (2006.01)     **G06N 3/04** (2006.01)

(52) Cooperative Patent Classification (CPC):
**G06N 3/063; G06N 3/0454; G06N 3/0445**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.01.2021 GB 202100046**
**04.01.2021 GB 202100044**

(71) Applicant: **Imagination Technologies Limited Kings Langley, Hertfordshire WD4 8LZ (GB)**

(72) Inventors:
- **ASAD, Muhammad**
  **London (GB)**
- **DIKICI, Cagatay**
  **London (GB)**

(74) Representative: **Elkington and Fife LLP Prospect House 8 Pembroke Road Sevenoaks, Kent TN13 1XR (GB)**

(54) **IMPLEMENTING FULLY-CONNECTED NEURAL-NETWORK LAYERS IN HARDWARE**

(57)     Methods and data processing systems are disclosed for implementing one or more fully connected layers of a neural network in hardware.

According to embodiments, coefficient data for at least one fully connected layer is loaded into an input buffer of a hardware accelerator, and input data for the at least one fully connected layer is loaded into a coefficient buffer of the hardware accelerator.

To be accompanied, when published, by Figure 9A of the accompanying drawings.

FIGURE 9A

EP 4 024 290 A1

## Description

BACKGROUND

Fully connected (FC) layers arise in a number of contexts, in neural networks. They are a key component in multilayer perceptrons (MLPs), for example. An MLP is a feedforward neural network defined using one or more fully connected layers. MLPs have been used widely to address a range of signal processing problems, including handwritten character recognition, data compression, vehicle intent prediction, financial forecasting, and noise reduction and analysis of electrocardiogram (ECG) signals.

Other instances where FC layers are used may include recurrent neural networks (RNNs) and the final layers of image classification networks.

"Fully connected" means that each output data element of the layer can be influenced by all of the input data elements of the layer. That is, every output data element is "connected" to every input data element by a weight. This means that there is a relatively large number of weights. For a layer with N input data elements and M output data elements, there are N x M weights in the fully connected layer. This means that fully connected layers are computationally intensive to process - although the arithmetic intensity (number of operations per weight) is relatively low compared with other operations, such as convolutions, the number of weights per filter means that the overall computational burden is still significant.

Fully connected layers differ significantly from convolutional layers. In a convolutional layer, a filter is shifted over one or more traversed dimensions of the input data. (When convolutional layers are used for image processing, for example, the traversed dimensions are usually the height and width dimensions of the image.) The same weights are reapplied at each shift, to a different window of the input data. For a convolutional layer with a stride of 1, each weight will be applied to every input data element, at some stage of the evaluation of the layer (subject to suitable padding). This contrasts with the structure of a fully connected layer, in which every single weight is unique. In other words, in a fully connected layer, there is no reuse of weights over any traversed dimension.

Existing neural network accelerator (NNA) hardware is generally specialised in evaluating convolutional layers. For example, an NNA may be adapted to multiply the same weight simultaneously by multiple input data elements, in parallel, at multiple processing elements. An exemplary NNA is configured to implement parallel processing by distributing calculations among the available processing elements along the width dimension (W). That is, a first set of data elements along a row is sent to a first processing element for processing, while a second set of data elements along that row is sent to a second processing element for processing. Each processing element also receives a set of weights. In the exemplary NNA, the same set of weights (coefficients) is sent simultaneously to all processing elements. Each processing element (a convolution engine) is configured to calculate the sum of products of its inputs. Thus, each processing element multiplies each of the input data elements that it receives by a respective one of the weights that it receives, and sums the results. This architecture can implement convolution operations very efficiently, to implement a convolutional neural network.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods and data processing systems are disclosed for implementing one or more fully connected layers of a neural network in hardware.

Data is often input to a neural network (and input to each layer of a neural network) in "batches". The batch size defines the number of the items of input data. For example, in the case of convolutional neural networks each "batch" of data may correspond to an image, and the batches may form a set of images to which the network is to be applied. The neural network is applied to each batch to produce output data having the same batch size as the input data. In the image-example, each image produces respective output data from the neural network (and similarly each image produces respective output data from each individual layer of the neural network).

According to embodiments, coefficient data for at least one fully connected layer is loaded into an input buffer of a hardware accelerator, and input data for the at least one fully connected layer is loaded into a coefficient buffer of the hardware accelerator.

According to an embodiment there is provided a method of implementing in hardware a fully connected layer of a neural network, the hardware comprising: a plurality of processing elements, each configured to multiply a set of one or more input data values and a set of one or more coefficients, in each cycle of a plurality of hardware cycles; a coefficient buffer, configured to supply, in each cycle, a single set of one or more coefficients to all of the processing elements; an input buffer, configured to supply, in each cycle, to each processing element a respective set of one or more input data elements, the method comprising: loading input data for the fully connected layer into the coefficient buffer; loading coefficient data for the fully connected layer into the input buffer; and evaluating the fully connected layer using the plurality of processing elements, wherein, in each cycle, a first processing element partially evaluates a first output data element of the fully connected layer while a second processing element partially evaluates a second output data element of the fully connected layer. The first output data element and the second output data element pertain to the same batch of input data. In different cycles, each processing element receives different input data and different coefficient data. The input data is common to both processing elements; the coefficient data differs between processing elements. Therefore, the coefficient data differs between processing elements in the same cycle, and differs for the same processing element between different cycles. Optionally, the input data consists of a single batch. The hardware may be fixed-function hardware (see below).

By swapping the coefficients and input data, the method can enable the fully connected layer to be evaluated efficiently using hardware that has been optimised for processing convolutional layers. The evaluation is effectively parallelised over different filters of the fully connected layer.

The hardware may further comprise an accumulation buffer, configured to sum the results of the partial evaluation by each processing element, over a plurality of hardware cycles.

The processing elements may be convolution engines, configured to calculate a sum of products between pairs of input values.

A hardware cycle is the period in which a piece of hardware performs a data processing operation. A hardware cycle may correspond, for example, to a clock period. Usually, the inputs to the piece of hardware are held constant for the entire hardware cycle. The output of the data processing operation may be recorded (for example, by latching, optionally in a register, buffer, or delay element) at the end of the hardware cycle. In the next cycle, the piece of hardware may process new inputs to produce a new output.

The method may further comprise, before loading the input data into the coefficient buffer, applying a transpose operation to the input data. The transpose operation may transpose the dimensions of the input data. For example, if the input data is stored as a column vector, the transpose operation may convert it to a row vector.

The method may further comprise, before loading the coefficient data into the input buffer, applying a transpose operation to the coefficient data to produce transposed coefficient data. In general, the transpose may be applied to the coefficient data at any time before it is needed.

In some embodiments, the coefficient data may be stored in a memory, and the method may comprise: retrieving the coefficient data from the memory; applying the transpose operation to the retrieved coefficient data; and loading the transposed coefficient data into the input buffer. In this case, the coefficient data is transposed immediately before loading into the input buffer.

In some embodiments, the method may comprise: obtaining the coefficient data; applying the transpose operation to the coefficient data; storing the transposed coefficient data in a memory; retrieving the transposed coefficient data from the memory; and loading the transposed coefficient data into the input buffer. In this case, the coefficient data is stored in the memory in the transposed format, ready for use without further transformation. This can allow the transpose operation to be performed in advance, saving time and effort at the time of loading the coefficient data into the input buffer. If the coefficient data is reused (for example, for several batches of input data) this approach can allow the transpose operation to be performed just once, avoiding the need to perform it each time the input buffer is loaded.

The method may further comprise, after evaluating the fully connected layer, applying a transpose operation to output data of the fully connected layer. This can be used to return the output data to the same format as the input data. The method may further comprise, after applying the transpose operation to the output data, storing the transposed output data in the memory.

The fully connected layer may be a first fully connected layer and the neural network may further comprise a second fully connected layer, the method optionally further comprising: loading output data of the first fully connected layer into the coefficient buffer, as input data for the second fully connected layer; loading coefficient data for the second fully connected layer into the input buffer; and evaluating the second fully connected layer using the plurality of processing elements.

The output data of the first FC layer can be loaded without first applying a transpose operation. In each cycle, a first processing element partially evaluates a first output data element of the second fully connected layer while a second processing element partially evaluates a second output data element of the second fully connected layer.

Also provided is a data processing system for implementing one or more fully connected layers of a neural network, the data processing system comprising: a hardware accelerator; and a controller, wherein the hardware accelerator comprises: a plurality of processing elements, each configured to multiply a set of one or more input data values and a set of one or more coefficients, in each cycle of a plurality of hardware cycles; a coefficient buffer, configured to supply, in each cycle, a single set of one or more coefficients to all of the processing elements; and an input buffer, configured to supply, in each cycle, to each processing element a respective set of one or more input data elements, wherein the controller is configured to: load input data for the fully connected layer into the coefficient buffer; and load coefficient data for the fully connected layer into the input buffer, and wherein the hardware accelerator is configured to evaluate the fully connected layer using the plurality of processing elements, wherein, in each cycle, a first processing element partially evaluates a first output data element of the fully connected layer while a second processing element partially evaluates a second output data element of the fully connected layer. The first output data element and the second output data element pertain to the same batch of input data. That is, they derive from the same batch of input data. Optionally, the input data consists of a single batch.

The hardware accelerator may comprise or consist of fixed-function hardware. In particular, the input buffer, the coefficient buffer, and each of the processing elements may be implemented in fixed-function hardware. "Fixed-function", in this context, refers to the property of the hardware that the logic it implements cannot be reconfigured after manufacture (or at least cannot be reconfigured extensively). This is in contrast to field programmable logic, for example, which is reconfigurable. It is also in contrast with general purpose processor hardware, which is fully programmable to implement any (arbitrary) function or algorithm. The hardware accelerator may be comprised in an application specific integrated circuit (ASIC). The behaviour of the fixed-function hardware may be programmable to a limited extent. A fixed-function hardware module may be able to perform its fixed function under the control of a limited set of parameters, for example. Each hardware module may therefore be reconfigurable only in the sense that it can implement, for example, convolution with various strides and kernel sizes, but it is not fully programmable in the sense that it could execute an arbitrary algorithm.

The data processing system may further comprise a first transpose unit, configured to apply a transpose operation to the input data before it is loaded into the coefficient buffer.

The data processing system may further comprise a second transpose unit, configured to apply a transpose operation to the coefficient data before it is loaded into the input buffer.

In some embodiments, the second transpose unit may be configured to: retrieve the coefficient data from a memory; apply the transpose operation to the retrieved coefficient data; and supply the transposed coefficient data to the input buffer.

In some embodiments, the second transpose unit may be configured to: obtain the coefficient data; apply the transpose operation to the coefficient data; store the transposed coefficient data in a memory; retrieve the transposed coefficient data from the memory; and supply the transposed coefficient data to the input buffer.

The data processing system may further comprise a third transpose unit, configured to apply a transpose operation to output data of the fully connected layer.

The hardware accelerator may further comprise an output buffer, configured to write results of the processing performed by the hardware accelerator to the memory. In particular, the output buffer may be configured to write the output data of the fully connected layer to the memory.

The data processing system may comprise a memory manipulation module, for manipulating data stored in a memory, wherein the memory manipulation module is configure to perform the functions of the or each transpose unit. The memory manipulation module may carry out the various transpose operations by means of permute operations, which reorder the dimensions of the respective tensor.

The memory manipulation module may comprise: an internal buffer; a memory reading block, configured to read data from the memory and write the data to the internal buffer; a memory writing block, configured to read the data from the internal buffer and write the data to the memory; and a control channel between the memory reading block and the memory writing block, wherein the memory reading block and the memory writing block are configured to communicate via the control channel to maintain synchronisation between them when writing the data to the internal buffer and reading the data from the internal buffer, respectively.

This memory manipulation module is well-suited for carrying out configurable transformations on data stored in the memory. This can provide an efficient way to handle the necessary transpose operations, without providing dedicated, separate hardware blocks to support each of them.

In examples according to a further aspect of the present disclosure, each fully connected layer is mapped to an equivalent convolutional layer. Input data for a first layer of the one or more fully connected layers is transformed so that batches are arranged along at least one dimension, such as a spatial dimension, that is traversed by the convolution operation. "Traversed" here refers to the operation of stepping or sliding a convolution kernel over one or more dimensions of an input tensor (typically over one or two dimensions - most commonly being the spatial dimensions of height and width). The pattern of the traversing is defined by a stride of the convolution.

According to an example of this further aspect, there is provided a method of implementing in hardware one or more fully connected layers of a neural network, the method comprising: mapping each layer of the one or more fully connected layers to an equivalent convolutional layer having one or more traversed dimensions; obtaining input data for the first layer of the one or more fully connected layers, the input data comprising a plurality of batches; transforming the input data such that the batches are arranged along at least one of the traversed dimensions; and evaluating, using the hardware, each of the one or more equivalent convolutional layers, using the transformed input data as input to the equivalent convolutional layer for the first layer. The hardware may be fixed-function hardware.

By mapping each fully connected layer to an equivalent convolutional layer and transforming the input data correspondingly, this method facilitates a more efficient implementation of fully connected layers on existing hardware that is optimised for evaluating convolution operations. This makes it suitable for implementing fully connected layers on an NNA. The traversed dimensions may be spatial dimensions - for example, height and width dimensions.

Each processing element optionally comprises:

a plurality of elements of multiply logic, each configured to multiply a weight by an input data element, and a plurality of elements of addition logic, configured in a tree structure to sum the outputs of the elements of multiply logic.

The one or more fully connected layers may be a series of consecutive fully connected layers. In this case, it is usually sufficient to transform only the input data of the first layer. The input data for subsequent layers is provided by the output data of preceding layers.

The method may further comprise inverse transforming output data of the equivalent convolutional layer for the final layer, such that the batches are no longer arranged along the at least one of the traversed dimensions.

The step of inverse transforming the output data is the inverse of the step of transforming the input data. This transforms the output data of the one or more layers back to its original format - that is, the same ordering of dimensions as the input data for the first layer.

As mentioned above, the method is applicable to one or more fully connected layers - in particular, one or more consecutive fully connected layers. If the one or more layers consist of just one layer, then the first layer and the last layer are the same layer.

The hardware may comprise: an input buffer, configured to temporarily store input data elements; a coefficient buffer, configured to temporarily store weights; and a plurality of processing elements, each of which is configured to multiply one or more input data elements by a weight. Optionally, in each of a plurality of hardware cycles: the coefficient buffer is configured to supply one set of one or more weights concurrently to all of the processing elements, and the input buffer is configured to supply each of the processing elements with respective different sets of one or more input data elements.

That is, the coefficient buffer supplies the same weight(s) to all of the processing elements, whereas the input buffer supplies a different input data element (or, depending on the structure of the processing elements, a different set of input data elements) to each respective processing element.

The hardware may be configured to evaluate convolutional layers by processing in parallel several sets of one or more input data elements, selected along a first traversed dimension among the traversed dimensions, and wherein, when transforming the input data, the input data is transformed such that the batches are arranged along at least the first traversed dimension.

The first traversed dimension may be a width (row) dimension. That is the hardware may parallelise the evaluation of the convolutional layer along rows. In this case, a first set of input data elements may be supplied to a first one of the processing elements. A second set of input data elements may be supplied concurrently to a second one of the processing elements. The first and second sets of input data elements may be separated by a stride in the row direction (that is, a stride along the first traversed dimension).

The input data may be transformed such that the batches are arranged along the first traversed dimension and at least one other traversed dimension. If the first traversed dimension is the width dimension, then the other traversed dimension may be a height dimension. As explained above, the hardware may parallelise the evaluation of the convolutional layer along the first traversed dimension. The evaluation along the second traversed dimension may be performed serially. That is, the first and second sets of input data elements mentioned above may be processed in a first hardware cycle. A third set of input data elements may be supplied to the first one of the processing elements in a second hardware cycle. A fourth set of input data elements may be supplied to the second one of the processing elements in the second hardware cycle. The third and fourth sets of input data elements may be separated by a stride in the row direction (that is, a stride along the first traversed dimension). The first and third sets (and likewise the second and fourth sets) of input data elements may be separated by a stride in the column direction (that is, a stride along the second traversed dimension).

The method optionally further comprises, before transforming the input data: estimating a first cost of evaluating the one or more fully connected layers directly in the hardware; estimating a second cost, including a cost of evaluating the one or more equivalent convolutional layers and a cost of the or each transform; and if the second cost is less than the first cost, proceeding to transform the input data and evaluate the one or more equivalent convolutional layers.

The cost may be a cost based on one or more of: time taken, number or rate of memory accesses required volume or rate of transfer of data to/from memory, and amount of power consumed, by the evaluation. The second cost includes the cost of transforming the input data. If method includes inverse transforming the output data, the second cost includes the cost of this inverse transforming too.

With this approach, the one or more fully connected layers are evaluated using their equivalent convolutional layers only if this is going to result in a performance benefit. Sometimes, the additional cost of transforming the input data (and, if necessary, inverse transforming the output data) may outweigh the benefit that is gained by evaluating the equivalent convolutional layers. In this case, the method can instead evaluate the fully connected layers directly (that is, without first transforming the input data).

The method may further comprise, before transforming the input data, selecting among two or more different candidate transformations for arranging the batches along first and/or second traversed dimensions, wherein the selecting comprises selecting the candidate transformation that is predicted to have the lowest cost among the different candidate transformations, and wherein transforming the input data comprises applying the selected transformation to the input data. The cost may be defined as above. The candidate transformations may differ in the number of batches that are arranged along each of the first and second traversed dimensions.

Also provided according to an example of the further aspect is a data processing system for implementing one or more fully connected layers of a neural network, the data processing system comprising: a mapping unit, configured to map each layer of the one or more fully connected layers to an equivalent convolutional layer having one or more traversed dimensions; an input, configured to obtain input data for the first layer of the one or more fully connected layers, the input data comprising a plurality of batches; a first transformation unit, for transforming the input data such that the batches are arranged along at least one of the traversed dimensions; and a hardware accelerator, configured to evaluate each of the one or more equivalent convolutional layers, using the transformed input data as input to the equivalent convolutional layer for the first layer. The hardware accelerator may comprise or consist of fixed-function hardware.

The data processing system may further comprise a second transformation unit, for inverse transforming output data of the equivalent convolutional layer for the final layer, such that the batches are no longer arranged along the at least one of the traversed dimensions. Note that, in some embodiments, the first transformation unit and the second transformation unit may be provided by the same hardware unit.

The hardware accelerator may comprise: an input buffer, configured to temporarily store input data elements; a coefficient buffer, configured to temporarily store weights; and a plurality of processing elements, each of which is configured to multiply a set of one or more input data elements by a set of one or more weights. In each of a plurality of hardware cycles: the coefficient buffer may be configured to supply one set of one or more weights concurrently to all of the processing elements, and the input buffer may be configured to supply each of the processing elements with a respective different set of input data elements.

The hardware accelerator may be configured to evaluate convolutional layers by processing in parallel several sets of one or more input data elements, selected along a first traversed dimension among the traversed dimensions, and the first transformation unit may be configured to transform the input data such that the batches are arranged along at least the first traversed dimension. Parallel processing along one of the traversed dimensions is an efficient way to process convolutions. Therefore, this structure may be desirable in a hardware accelerator designed generally for implementing neural networks, or designed specifically for implementing convolutional neural networks.

The first transformation unit may be configured to transform the input data such that the batches are arranged along the first traversed dimension and at least one other traversed dimension. As explained above, the evaluation of the convolutional layer is parallelised along the first traversed dimension. The evaluation along the second traversed dimension may be performed serially.

The mapping unit may be configured to: estimate a first cost of evaluating the one or more fully connected layers directly by the hardware accelerator; estimate a second cost, including a cost of evaluating the one or more equivalent convolutional layers by the hardware accelerator and a cost of the or each transform; and if the second cost is less than the first cost, control the first transformation unit to transform the input data and control the hardware accelerator to evaluate the one or more equivalent convolutional layers.

The mapping unit may be configured to select among two or more different candidate transformations for arranging the batches along first and/or second traversed dimensions, wherein the selection comprises selecting the transformation that is predicted to have the lowest cost, among the different candidate transformations, and wherein the first transformation unit is configured to transform the input data by applying the selected transformation to the input data.

The first transformation unit and the second transformation unit may be provided by a memory manipulation module, for manipulating data stored in a memory. The memory manipulation module may be as summarised above.

The one or more fully connected layers may form one of the following: a multilayer perceptron; and a recurrent neural network. The one or more fully connected layers may form part of a convolutional neural network.

Also provided is a neural network accelerator configured to perform a method as summarised above. The data processing system or neural network accelerator may be embodied in hardware on an integrated circuit.

Also provided is a method of manufacturing, using an integrated circuit manufacturing system, a data processing system or a neural network accelerator as summarised above.

Also provided is a method of manufacturing, using an integrated circuit manufacturing system, a data processing system or NNA as summarised above, the method comprising: processing, using a layout processing system, a computer readable description of the data processing system or NNA so as to generate a circuit layout description of an integrated circuit embodying the data processing system or NNA; and manufacturing, using an integrated circuit generation system, the data processing system or NNA according to the circuit layout description.

Also provided is computer readable code configured to cause a method as summarised above to be performed when the code is run. Also provided is a computer readable storage medium having encoded thereon the computer readable code.

Also provided is an integrated circuit definition dataset that, when processed in an integrated circuit manufacturing system, configures the integrated circuit manufacturing system to manufacture a data processing system or NNA as summarised above.

Also provided is a computer readable storage medium (optionally non-transitory) having stored thereon a computer readable description of a data processing system or NNA as summarised above that, when processed in an integrated circuit manufacturing system, causes the integrated circuit manufacturing system to manufacture an integrated circuit embodying the data processing system or NNA.

Also provided is a computer readable storage medium (optionally non-transitory) having stored thereon a computer readable description of a data processing system or NNA as summarised above which, when processed in an integrated circuit manufacturing system, causes the integrated circuit manufacturing system to: process, using a layout processing system, the computer readable description of the data processing system or NNA so as to generate a circuit layout description of an integrated circuit embodying the data processing system or NNA; and manufacture, using an integrated circuit generation system, the data processing system or NNA according to the circuit layout description.

Also provided is an integrated circuit manufacturing system configured to manufacture a data processing system or NNA as summarised above.

Also provided is an integrated circuit manufacturing system comprising: a computer readable storage medium (optionally non-transitory) having stored thereon a computer readable description of a data processing system or NNA as summarised above; a layout processing system configured to process the computer readable description so as to generate a circuit layout description of an integrated circuit embodying the data processing system or NNA; and an integrated circuit generation system configured to manufacture the data processing system or NNA according to the circuit layout description.

The layout processing system may be configured to determine positional information for logical components of a circuit derived from the integrated circuit description so as to generate a circuit layout description of an integrated circuit embodying the data processing system or NNA.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1A illustrates a fully connected layer being implemented as a matrix multiplication;

Figure 1B illustrates the fully connected layer of Figure 1A mapped to a convolutional layer;

Figures 2A-F provide a graphical illustration of various configurations of batch-to-space transformations and their corresponding space-to-batch transformations;

Figures 3A-3D show how fully connected layers in different types of neural network may be mapped to convolutional layers, when multiple batches of data are to be processed;

Figure 4 is a block diagram of a data processing system for implementing one or more fully connected layers, according to an embodiment of a first aspect;

Figure 5A is a block diagram of the hardware accelerator in Figure 4;

Figure 5B is a block diagram of a convolution engine as used in Figure 5A;

Figure 6 is a block diagram of the memory manipulation module in Figure 4;

Figure 7 is a flowchart illustrating a method for implementing fully connected layers in hardware, according to an embodiment of the first aspect;

Figure 8 is a block diagram of a data processing system for implementing one or more fully connected layers, according to an embodiment of a second aspect;

Figures 9A-9C are flowcharts illustrating methods of implementing fully connected layers in hardware, according to embodiments of the second aspect;

Figure 10 shows a computer system in which a data processing system is implemented; and

Figure 11 shows an integrated circuit manufacturing system for generating an integrated circuit embodying a data processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

The exemplary NNA architecture mentioned above in the background section is not optimised for efficient evaluation of fully connected layers. The optimisation for convolutional layers is based on the reuse of weights at each shift (stride) of the convolution kernel over the traversed dimensions. Because the key assumption of reuse of weights in this way breaks down for FC layers, the NNA architecture is unable to exploit this to implement parallel processing. Nevertheless, it may be undesirable to depart significantly from the exemplary architecture, because convolutional layers are also an important component of modern neural networks. Indeed, some neural networks include a combination of convolutional and fully connected layers. It would be undesirable to accelerate fully connected layers at the expense of convolutional layers. What is needed is an approach that allows greater acceleration of FC layers, preferably without slowing down the evaluation of convolutional layers.

A fully connected layer corresponds to a vector-matrix multiplication between input data elements and weight coefficients:

$$y = Wx$$

Here, the vector x is the input data, the matrix W contains the weights, and the vector y is the output data. The input data vector x has $C_{in}$ elements. The weight matrix W has $C_{out}$ x $C_{in}$ elements. The output data vector y has $C_{out}$ elements.

This vector-matrix multiplication can be implemented as a 1 x 1 convolution, with stride=1 and padding=0. At its heart, a convolution is based on a sum-of-products calculation, which is how each of the output data elements (in the vector y) is calculated. In the implementation based on convolution, each row of the weight matrix, W, is convolved with the input data vector, x, to produce a respective element of the output data vector, y. That is, each output data element can be calculated by a convolution between the input data vector and a vector of weights having identical dimensions to the input data vector. Because the weight vector is the same size of the input data vector, there is no shifting (striding) involved in this convolution. (The input data vector is not padded.) More specifically, the input data x is reshaped into a tensor with dimensions $C_{in}$ x 1 x 1; and the coefficient data W is reshaped into $C_{out}$ filters, each

with dimensions $C_{in}$ x 1 x 1. The output y of the convolution has dimensions $C_{out}$ x 1 x 1. Here, and throughout this document, the convention "BCHW" is used when listing dimensions of tensors. That is, the batch dimension (B), when present, is listed first, followed by the channel dimension (C), followed in turn by the height (H) and width (W) dimensions.

This concept can be extended to input data tensors in higher dimensions, but the principle remains the same - each element of the output data tensor is calculated by a 1 x 1 convolution between the input data tensor and an identically sized weight tensor.

The inventors have recognised that this can be used to accelerate the evaluation of fully connected layers on existing NNA hardware.

According to a first aspect, when there are multiple batches of input data to process, the data can be transformed so that the batches are packed into at least one of the traversed dimensions. Preferably, the input data is transformed so that the batches of input data are packed into the dimension in which the NNA exploits parallelism. (We will call this the "parallelised" dimension.) For example, if the NNA is configured to distribute input data elements to processing elements along the width dimension, then the batches are preferably packed into the width dimension.

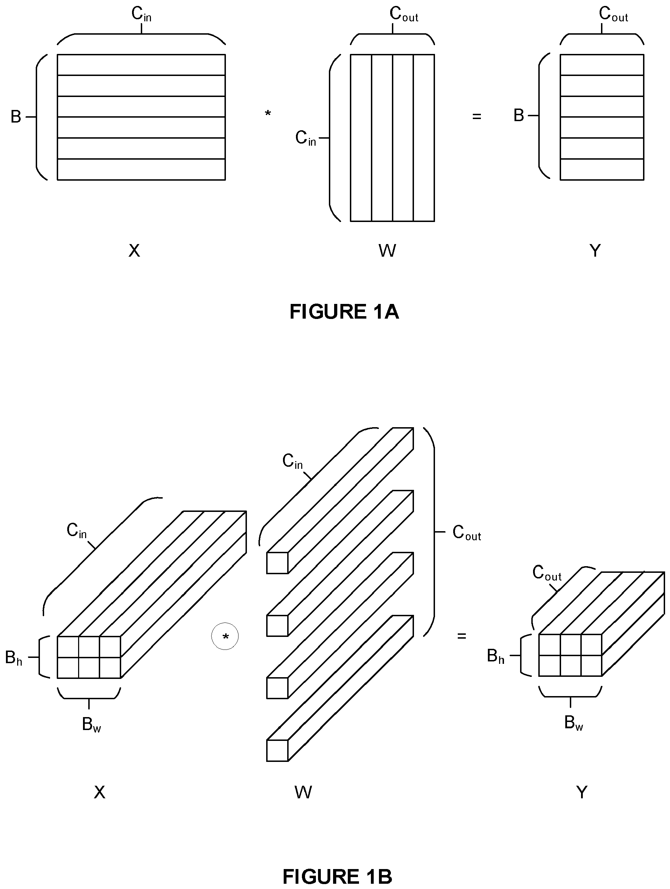

When there are multiple batches, the vector-matrix multiplication, discussed above, becomes a matrix multiplication. This is illustrated in Figure 1A. The weight matrix W has dimensions $C_{in}$ x $C_{out}$. The input data matrix X has B x $C_{in}$ elements. That is, the input data vectors for the different batches are stacked to form the matrix X. The output data matrix Y has B x $C_{out}$ elements. Again, the individual output data vectors associated with the different batches are stacked into a matrix. The asterisk (*) denotes matrix multiplication.

Figure 1B illustrates how this can be mapped to an equivalent convolution. The data is transformed so that the batches are arranged in the traversed (spatial) dimensions w and h. The batches are arranged with $B_h$ batches along the height dimension and $B_w$ batches along the width dimension, where $B_h$ x $B_w$ = B. The input data tensor therefore has dimensions 1 x $C_{in}$ x $B_h$ x $B_w$. There are $C_{out}$ filters, each with dimension 1 x $C_{in}$ x 1 x 1. Each of these filters is convolved with the input data tensor, to produce an output with dimensions 1 x 1 x $B_h$ x $B_w$. And the complete set of $C_{out}$ of these outputs is stacked into an output data tensor with dimensions 1 x $C_{out}$ x $B_h$ x $B_w$. The operator $\circledast$ denotes convolution. In particular, this is a 1 x 1 convolution with stride=1 and padding=0. By implementing the fully connected layer by means of convolutions in this way, the implementation becomes suitable for acceleration on hardware that is optimised for convolutions, such as an NNA. The same coefficients can now be applied in parallel to different spatial locations in the input data - that is, the same filter can be applied in parallel in the $B_h$ or $B_w$ dimension. This saves additional hardware cycles that may be required for the matrix multiplication implementation. It also saves bandwidth for loading the weights from memory, because the weights are reused after they are read from memory, which should reduce the number of times they need to be read.

The NNA can evaluate the convolution operation normally, operating on the transformed data structure. In doing so, several batches may be processed concurrently by different processing elements of the NNA, to evaluate the FC layer for all batches. Essentially, this approach exploits the fact that the weights are reused between batches, even though there is no reuse of weights within each batch. This is enabled by the transformation of the input data X illustrated in Figure 1B. The batches are packed in to the spatial (traversed) dimensions, to create a tensor that can be traversed in the convolution operation. We will refer to this transformation of packing the batch dimension into one or more spatial dimensions as "batch to space". Note that the output Y in Figure 1B still has the batch dimensions packed in the spatial dimensions. If there are subsequent convolutional layers in the network, after the FC layer, then it may be desirable to apply the inverse of the "batch to space" transformation to the output data, in order to return it to its original format. This inversion, putting the batches back in their "normal" place in the batch dimension, is referred to as "space to batch". It should be understood that the "batch to space" transformation is configurable to some extent, in that more or fewer batches can be packed in either the height or width dimensions. For example, it is possible that all the batches may be packed in one traversed dimension, such that $B=B_w$ or $B=B_h$.

The approach described above, with reference to Figure 1B, can be used to evaluate one FC layer, or a set of consecutive FC layers (such as in an MLP network). Only the input data of the first of the layers needs to be transformed. Subsequent FC layers will receive their input data from preceding FC layers; therefore, the data will already be in the correct format. After the evaluation of the final FC layer, the data can be transformed back to its original format (for example, for processing by one or more subsequent layers of the network, which are not FC layers).

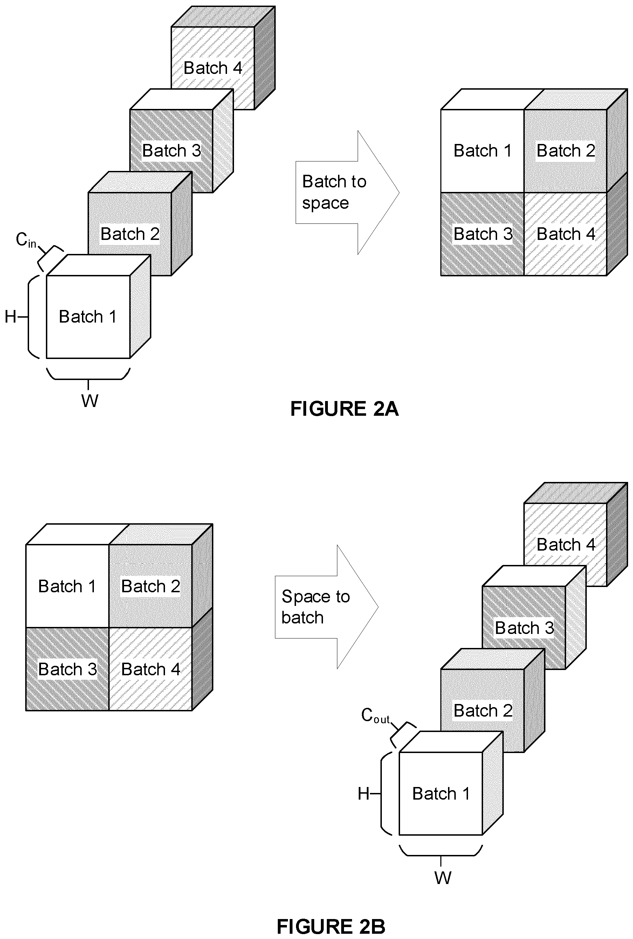

Figures 2A-2F provide a graphical illustration of some of batch-to-space and space-to-batch transformations, for an example with B=4 batches. Each batch has dimensions $C_{in}$ x H x W, such that the overall input tensor has dimensions B x $C_{in}$ x H x W. The four batches can be transformed into one of three shapes, for evaluations based on equivalent convolutional layers. Figure 2A illustrates a batch to space transformation in which $B_h=B_w=2$. The first two batches are arranged side by side, in the width dimension; the second two batches are arranged side by side, in the width dimension, with the second two batches stacked directly below the first two batches, in the height dimension. The transformed tensor has dimensions 1 x $C_{in}$ x 2H x 2W. Figure 2B shows the inverse (space to batch) transformation, returning the four batches to the batch dimension. The space to batch transformation is applied to output data of the one or more fully connected layers; therefore, the number of channels is $C_{out}$. The space to batch transformation transforms an output tensor of dimensions 1 x $C_{out}$ x 2H x 2W to a tensor of dimensions B x $C_{out}$ x H x W.

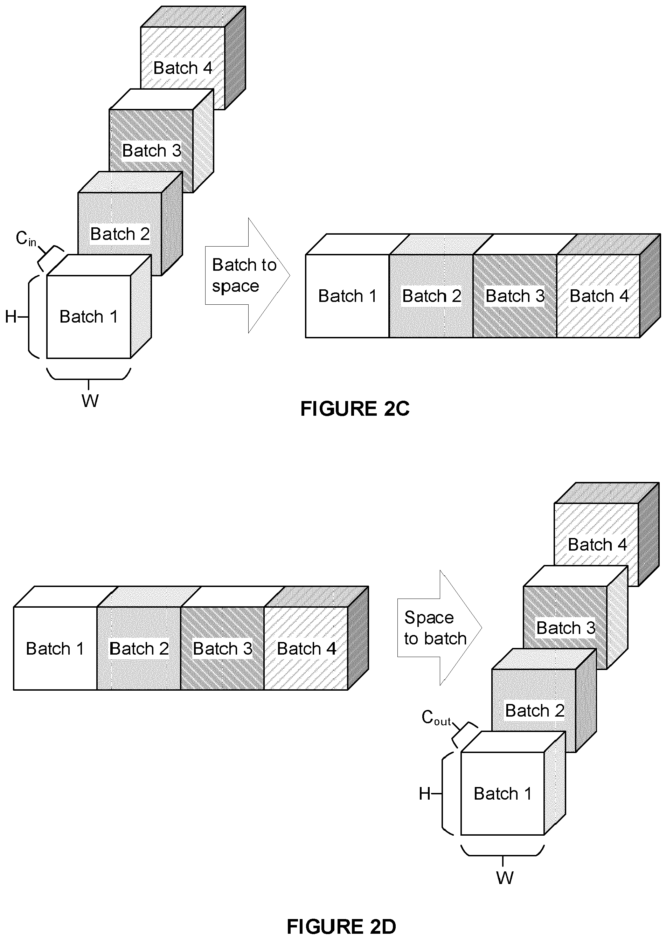

Figure 2C illustrates an alternative batch to space transformation in which $B_h=1$ and $B_w=4$. That is, all four batches are arranged side by side in the width dimension. The transformed tensor has dimensions 1 x $C_{in}$ x H x 4W. Figure 2D shows the inverse (space to batch) transformation, returning the four batches to the batch dimension. The space to batch transformation transforms an output tensor of dimensions 1 x $C_{out}$ x H x 4W back to a tensor of dimensions B x $C_{out}$ x H x W.

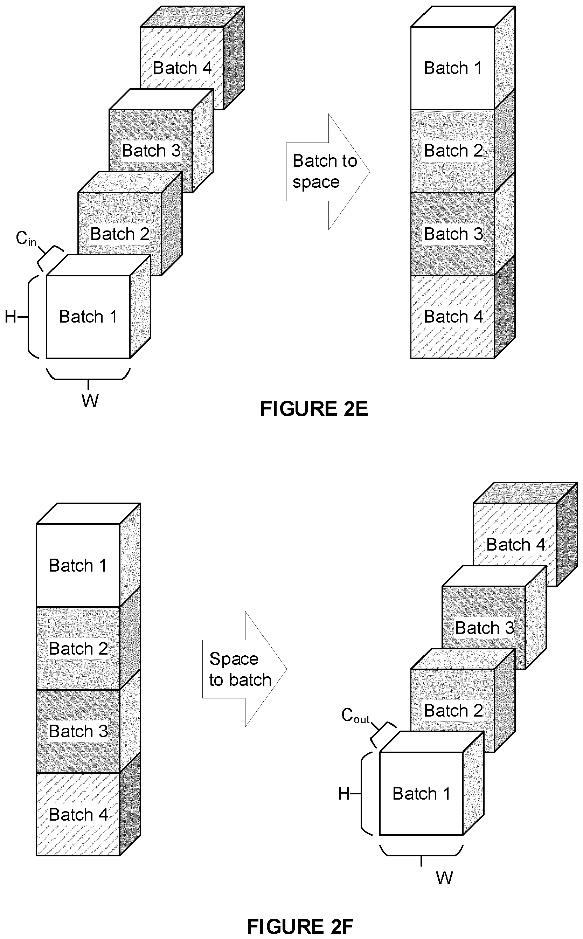

Figure 2E illustrates another alternative batch to space transformation, in which $B_h=4$ and $B_w=1$. That is, all four batches are stacked one on top of the other in the height dimension. The transformed tensor has dimensions 1 x $C_{in}$ x 4H x W. Figure 2F shows the inverse (space to batch) transformation, returning the four batches to the batch dimension. The space to batch transformation transforms an output tensor of dimensions 1 x $C_{out}$ x 4H x W back to a tensor of dimensions B x $C_{out}$ x H x W. It should be understood that the three examples illustrated in these Figure 2 are purely exemplary and non-limiting. In general, there may be any number of batches, and some or all of these batches may be arranged in the traversed dimensions of height and width in any appropriate way.

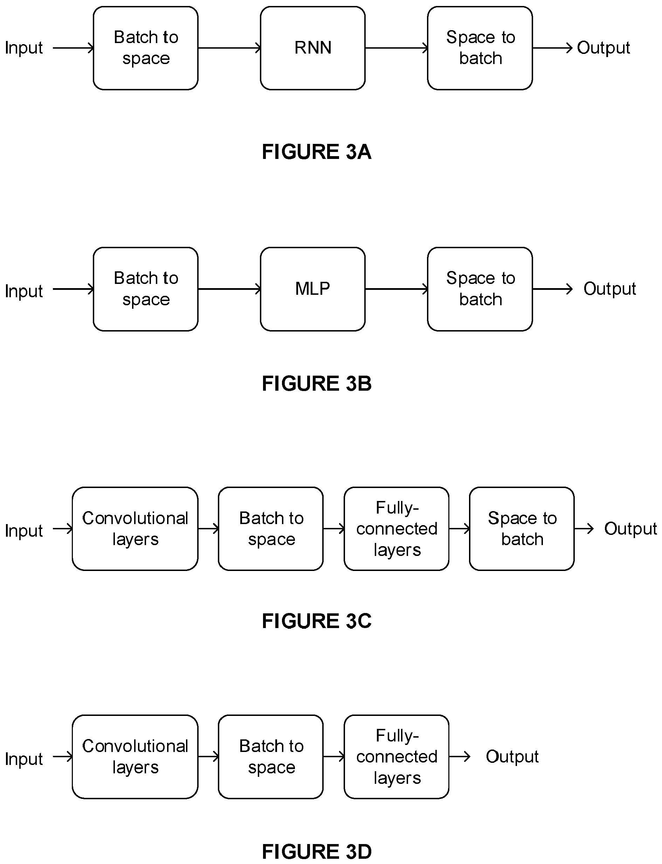

Figures 3A-3D show various examples of how this may be applied to practical neural networks. In Figure 3A, the neural network is a recurrent neural network (RNN). The input data is transformed ("batch to space") to arrange the batches along one or more traversed (spatial) dimensions. Then, the RNN is evaluated in the form of its equivalent convolutional layers. At the output of the RNN, the output data is inverse transformed ("space to batch") to restore its original format - the batches are no longer arranged along the spatial dimensions, but are restored to the batch dimension. Figure 3B shows exactly the same approach applied to a multilayer perceptron (MLP).

In Figure 3C, the neural network comprises a number of convolutional layers, followed by a number of fully connected layers. The convolutional layers are evaluated as normal by the NNA. The fully connected layers (which are replaced with their equivalent convolutional layers) are bracketed between the necessary data transformations (batch to space; and space to batch). Figure 3D shows a slightly different case. Similarly to Figure 3C, the convolutional layers are evaluated as normal by the NNA. A batch-to-space transformation is inserted before the fully connected layers, which are evaluated by the NNA in the form of the equivalent convolutional layers. However, there is no space-to-batch inverse transformation at the output of the fully connected layers. This may be appropriate in an image classification network, for example. The output of the network may be an indication of the class to which the input image belongs. In general, there is no need to transform such output data again.

Naturally, the transformations before and after the FC layer(s) come at some cost, in terms of the resources (for example, time, memory bandwidth and/or power) needed to execute them. However, in most cases, the benefits of exploiting parallelism in the NNA outweigh these costs - especially when evaluating multiple consecutive FC layers.

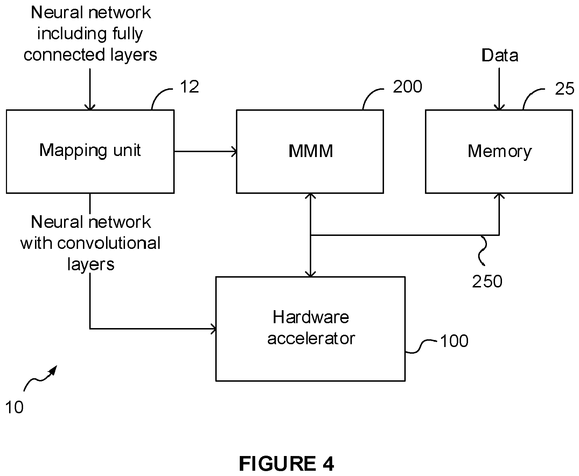

Figure 4 is a block diagram of a data processing system 10 for implementing fully connected layers on a hardware accelerator (for example, an NNA), according to an embodiment of the first aspect. The data processing system comprises the hardware accelerator 100; a mapping unit 12; a memory 25; and a memory manipulation module (MMM) 200. At least the hardware accelerator 100, the memory 25, and the MMM 200 are connected by a data bus 250. The mapping unit 12 is configured to receive a definition of a neural network including one or more fully connected layers. It is configured to control the MMM 200 and the hardware accelerator 100 to implement the fully connected layers of the neural network by means of equivalent convolutional layers.

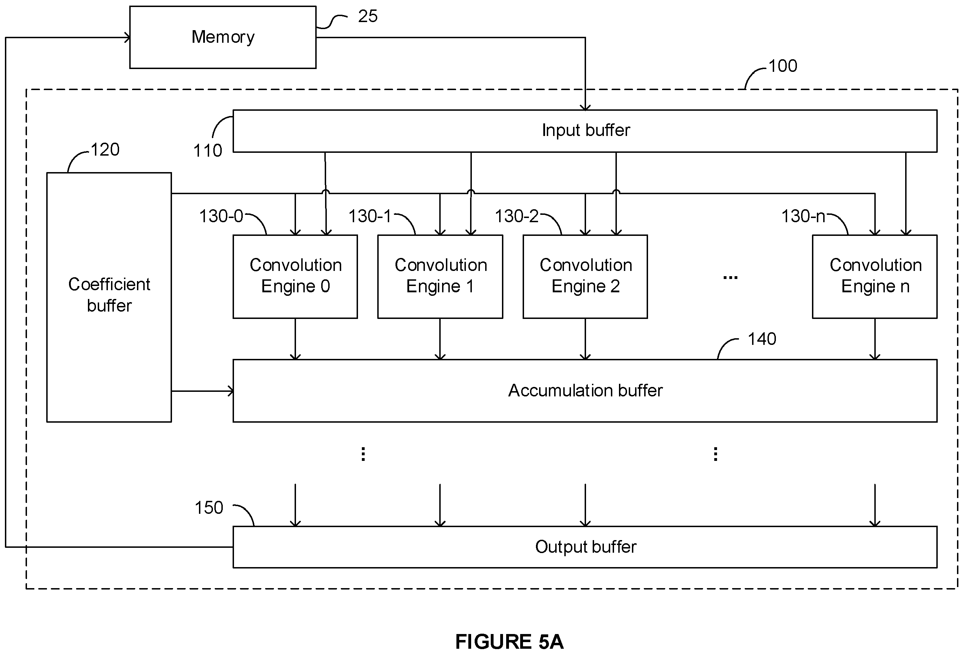

Figure 5A is a simplified block diagram of the hardware accelerator 100 used in Figure 4. In this example, the hardware accelerator 100 is an NNA. The NNA comprises an input buffer 110, a coefficient buffer 120, a plurality of processing elements (in particular, convolution engines) 130, an accumulation buffer 140, and an output buffer 150. In each hardware cycle, the coefficient buffer 120 is configured to supply a single set of coefficients (that is, weights) concurrently to all of the processing elements 130. Meanwhile, in each hardware cycle, the input buffer 110 is configured to supply each of the processing elements with a respective different set of the input data elements, corresponding to different shifts (strides) of the kernel. Each processing element 130 is configured to multiply the coefficients that it receives from the coefficient buffer 120 by the respective input data elements that it receives from the input buffer 110, and sum the results. That is each processing element 130 is configured to perform a sum-of-products calculation. The results of these sum-of-products calculations are output to the accumulation buffer 140, which accumulates (sums) them, as appropriate, over multiple hardware cycles. The accumulation buffer 140 is also configured to receive a bias value from the coefficient buffer 120, in each hardware cycle, which can also be added to the results of the multiplications.

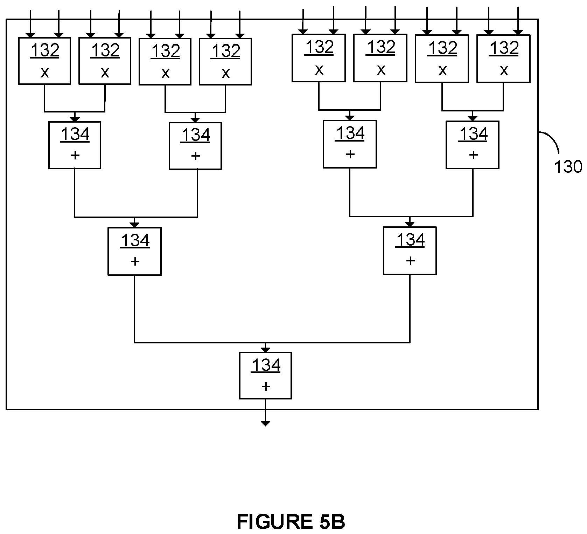

Figure 5B shows an example implementation of a convolution engine 130 as illustrated in Figure 5A, which comprises a plurality of elements of multiply logic 132, each configured to multiply a weight by an input data element, and a plurality of elements of addition logic 134, configured in a tree structure to sum the outputs of the elements of multiply logic 132.

For completeness, we note that a typical NNA would also incorporate additional blocks, including but not limited to: activation, pooling, element-wise and normalisation blocks. The results of the processing performed by the hardware accelerator (including the convolution engines 130, accumulation buffer 140, and any additional blocks) are provided to the output buffer 150, which writes them to the memory 25.

This architecture works well for convolutional layers, where the same weight needs to be multiplied by several input data elements, over the strides of the kernel, in order to evaluate the layer. However, it is not efficient at implementing FC layers. Note that, ordinarily, when evaluating a fully connected layer directly with this architecture, only one of the processing elements 130-0 would be used at a time, because there is no traversed (spatial) dimension in the FC layer, and likewise no traversed (spatial) dimension in the equivalent matrix multiplication. The NNA is designed to apply parallel processing along a traversed dimension, and thereby implement convolutions efficiently. Since there is no weight reuse in the spatial dimensions, when evaluating the FC layer directly, the NNA cannot parallelise the evaluation natively, itself.

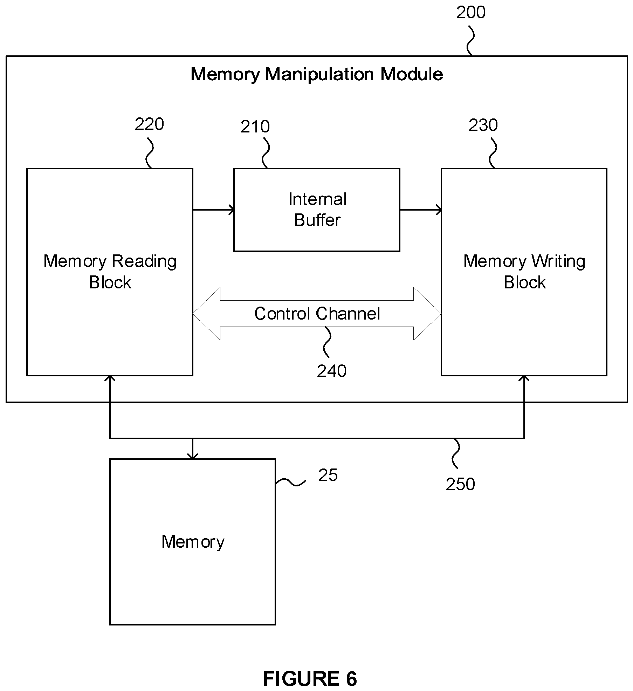

Figure 6 is a block diagram of the MMM 200 used in Figure 4. The MMM is configurable to manipulate data in memory in various ways. In the context of the present embodiment, it performs the transformations (batch to space, and space to batch) that are necessary to implement the fully connected layers as convolutional layers. As mentioned already, the MMM is coupled to the memory 205, via the bus 250. The MMM 200 comprises a memory reading block 220; an internal buffer 210; and a memory writing block 230. A control channel 240 is used to coordinate the operations performed by the memory reading block 220 and the memory writing block 230. Both the memory reading block 220 and the memory writing block 230 are coupled to the bus 250. An output of the memory reading block 220 is coupled to an input of the internal buffer 210. An input of the memory writing block 230 is coupled to an output of the internal buffer 210.

The memory reading block 220 reads data from the memory 205. The memory reading block 220 writes the data (that was read from the memory 205) to the internal buffer 210. The memory writing block 230 reads data from the internal buffer 210 and writes the data (that was read from the internal buffer 210) back to the external memory 205.

By the combination of operations performed by the memory reading block 220 and the memory writing block 230, the data is transformed. The transformation may occur when moving the data from the memory 205 to the internal buffer 210, or it may occur when moving the data from the internal buffer 210 to the memory 205. In some cases, the transformation may occur in part between the memory 205 and the internal buffer 210, and in part between the internal buffer 210 and the memory 205.

Because the memory reading block 220 and the memory writing block 230 are provided as separate hardware blocks, they are able to operate in parallel. That is, the memory reading block 220 can perform steps 310 and 320 while the memory writing block 230 is performing steps 330 and 340. The control channel 240 provides for communication between the memory reading block 220 and the memory writing block 230, to maintain synchronisation between the two blocks.

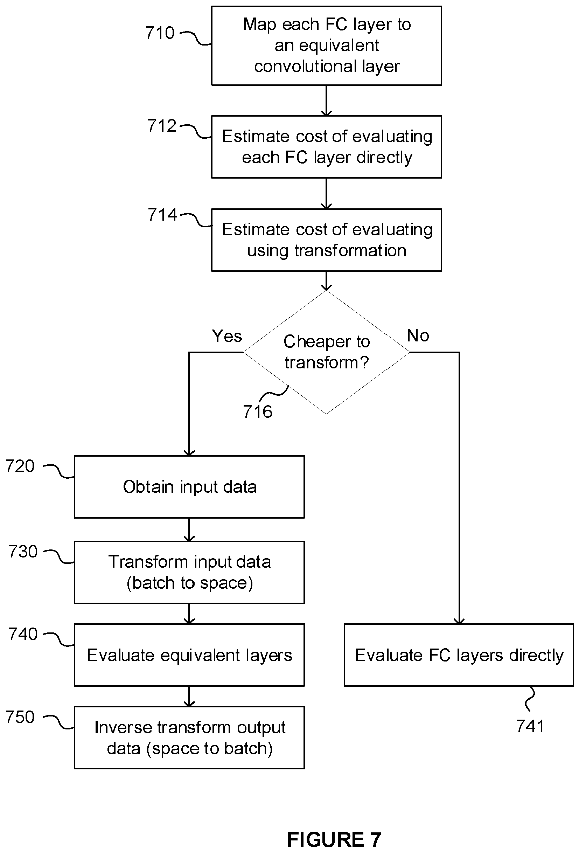

Figure 7 is a flowchart illustrating a method performed by the data processing system 10 according to the present embodiment. The mapping unit receives as input a definition of the neural network to be evaluated. The network includes a number of fully connected layers. For the sake of simplicity in this example, it will be assumed that the fully connected layers are all consecutive. This means that at most two transformations of data are necessary - one transformation before the fully connected layers are implemented, and (possibly) another transformation after they have been implemented.

In step 710, the mapping unit 12 maps each fully connected layer to an equivalent convolutional layer. This is done according to the principles described above with reference to Figures 1A and 1B. In step 712, the mapping unit estimates the cost of evaluating the set of fully connected layers directly (that is, without transformation and without using the equivalent convolutional layers), using the hardware accelerator 100. The mapping unit estimates this based on knowledge of how the hardware accelerator is configured to operate. In step 714, the mapping unit estimates the cost of evaluating the set of fully connected layers by means of their equivalent convolutional layers (as determined in step 710). This includes the cost of the transformations before and (potentially) after the evaluation of these layers.

The mapping unit 12 may also explore different possible ways to configure the equivalent convolutional layers. In particular, in step 710, the mapping unit may construct two or more different candidate transformations for arranging the batches along the traversed dimensions (as exemplified above in Figure 2, for the case of four batches). Each candidate transformation may use a different combination of $B_h$ and $B_w$. In some scenarios, for example, setting $B_h=1$ and $B_w=B$ may result in the best performance. In other cases, setting $B_h$ to a low number (for example, 16) and setting $B_w=B / B_h$ leads to better performance (note that $B_w$ might be larger than $B_h$). The optimal transformation may depend on the input to the FC layers as well as coefficient size and the relevant buffer sizes and/or number of convolution engines in the hardware accelerator. In step 714, the mapping unit may estimate the cost of each of evaluating the FC layers using each of the different candidate transformations.

The costs estimated in steps 712 and 714 may be calculated as a number of hardware cycles, or a time duration, or a power consumption, or a memory-access bandwidth, or based on a combination of these factors.

In step 716, the mapping unit 12 compares the costs estimated in steps 712 and 714. If the cost of evaluating the fully connected layers directly is lower, the mapping unit 12 controls the hardware accelerator 100 to do this, in step 741. On the other hand, if the cost of evaluating the equivalent convolutional layers (including cost of transformations) is lower, the method proceeds to step 720. If multiple different candidate transformations were developed in step 710, the mapping unit can select the one that delivers the lowest cost. This transformation will then be used to implement the FC layers.

In step 720, the data processing system 10 obtains input data for the first layer in the set of fully connected layers. As explained previously, the input data includes a number of batches B. In step 730, the MMM 200 transforms the input data such that the batches are arranged along one or more of the traversed spatial dimensions. As indicated in the example of Figure 1B, $B_w$ batches are arranged along the width dimension, and $B_h$ batches are arranged along the height dimension. The data is now arranged in a way that the hardware accelerator can exploit to parallelise the evaluation of the fully connected layers.

In step 740, the hardware accelerator evaluates the equivalent convolutional layers, using the transformed input data produced in step 730 by the MMM 200. The hardware accelerator 100 is able to parallelise the calculation, because the batches are spread along the width dimension. In each hardware cycle, the coefficient buffer 120 supplies one set of the weights to all of the convolution engines 130. At the same time, the input buffer 110 supplies different sets of input data elements to the convolution engines. A first set of data elements, from a first batch, goes to a first convolution engine 130-0; and a second set of data elements, from a second batch, goes to a second convolution engine 130-1. A third set of data elements, from a third batch, goes to the third convolution engine 130-2. In the simplified example shown in Figure 1B, $B_w=3$; therefore, the remaining convolution engines would be idle. In practice, the mapping unit, when choosing the dimensions $B_w$ and $B_h$, will try to ensure that as many convolution engines as possible are occupied in every hardware cycle. However, this may also depend to some extent on the capacity of the input buffer 110.

In each hardware cycle, each convolution engine 130 produces a portion of the output of one of the $C_{out}$ convolutions that need to be performed. These portions are summed in the accumulation buffer 140 over multiple hardware cycles, until the output data for one of the fully connected layers is produced. The output data from each fully connected layer forms the input data to the next fully connected layer, which is likewise evaluated by means of its equivalent convolutional layer. This continues until all of the fully connected layers have been evaluated.

In step 750, the MMM 200 inverse transforms the output data from the final equivalent convolutional layer, to return it to the original format of the input data. This involves moving the batches out of the spatial dimensions and back into the batch dimension (hence "space to batch"). With this step, the evaluation of the fully connected layers is complete. Note that, thanks to the batch to space transformation before the first fully connected layer, and the space to batch transformation after the final fully connected layer, there is no impact on any of the other layers in the neural network. The evaluation of the fully connected layers is transparent to these other layers - that is, the other layers see the same data, in the same format, irrespective of whether the fully connected layers are evaluated directly or are evaluated by means of a transformation and equivalent convolutional layers.

When mapping a fully connected layer to an equivalent convolutional layer, it is advantageous if the number of batches packed into the parallelised dimension (in this example, the width dimension) is greater than or equal to the number of processing elements (convolution engines 130). More preferably, the number of batches packed into this dimension is an integer multiple of the number of processing elements. This helps to maximise the performance increase.

There is also some benefit in packing the batches into a traversed dimension other than the parallelised dimension. For instance, if the NNA parallelises over the width dimension, (as in the present example), there may still be some benefit in packing batches also into the height dimension. This is because the weights may be retained on-chip between batches, leading to a reduction in memory access bandwidth (even if there is no additional parallelism). Depending on the hardware implementation, the weights may be retained in the coefficient buffer 120 or in an on-chip memory (OCM) (not illustrated). It would be desirable to always store weights in the coefficient buffer 120 between batches. However, the ability to do this depends on the weights fitting in the coefficient buffer. If the weight data is large, compared with the size of the coefficient buffer, then this might not be possible.

Several variations are possible to the embodiment described above. For example, although the MMM 200 was used to perform both the transformation 730 and the inverse transformation 750, this is not essential. In other embodiments, a dedicated first transformation unit may be provided to transform the input data in step 730, and a separate, dedicated second transformation unit may be provided to perform the inverse transformation in step 750.

It should also be understood that the batches may be arranged in the traversed (e.g. spatial) dimension in various ways. In the example above, in Figure 1B, all of the batches were arranged over the width and height dimensions. That is, the transformed input data had dimensions $1 \times C_{in} \times B_h \times B_w$, where $B = B_h * B_w$. In other examples, the batches may be arranged differently. For example:

- Spread over height only, with tensor dimensions $1 \times C_{in} \times B \times 1$;
- Spread over width only, with tensor dimensions $1 \times C_{in} \times 1 \times B$; or
- Spread over batch, width, and height, with tensor dimensions $B_b \times C_{in} \times B_h \times B_w$ (where $B = B_b \times B_h \times B_w$)

The values of $B_h$ and $B_w$ can be balanced so that each is neither is too large or too small. In particular, they can be balanced so that the required input data is able to fit into the input buffer. As mentioned already above, the mapping unit may be configured to explore various different possible configurations of $B_h$ and $B_w$, selecting among different candidate transformations the one that gives optimal performance in a given scenario. The optimal transformation (and the corresponding optimal set of equivalent convolutional layers) may be different for different hardware accelerators. For example, they may vary depending on the number of convolution engines, and/or depending on the sizes (that is, storage capacities) of the input and/or coefficient buffers. All of this may be taken into account when constructing the transformation and equivalent convolutional layers, in step 710, and estimating their cost, in step 714.

In the example illustrated in Figures 1A-1B, the original input data consisted of B batches, each comprising $C_{in}$ input channels. The height and width of the original input data were both equal to one, so that the overall dimensions of the tensor were $B \times C_{in} \times 1 \times 1$. This was reshaped into a tensor with dimensions $1 \times C_{in} \times B_h \times B_w$, and the equivalent convolutional layer had stride=1 and padding=0. The coefficient data had dimensions $C_{out} \times C_{in} \times 1 \times 1$. The same approach can be extended to input data having heights and widths greater than one - for example, image data - as illustrated in Figure 2. In the case of an image with height=H, width=W, and a number of input channels $C_{in}$, the original input tensor dimensions will be $B \times C_{in} \times H \times W$. For the equivalent convolutional layer, this can be converted into a tensor with dimensions $1 \times C_{in} \times B_h H \times B_w W$. The coefficient data will have dimensions $C_{out} \times C_{in} \times H \times W$, and the convolution will have stride of H in the height dimension and a stride of W in the width dimension. In other words, for each filter (output channel), the coefficient data is the same size as one batch of the image data, and the convolution is carried out in shifts (strides) that are the same sizes as these batches. Essentially, the picture will be structurally the same as in Figure 1B, but the individual blocks will each have height and width dimensions of H x W, instead of just 1 x 1. This is shown in the example illustrated in Figure 2. Extensions to higher dimensions will work similarly.

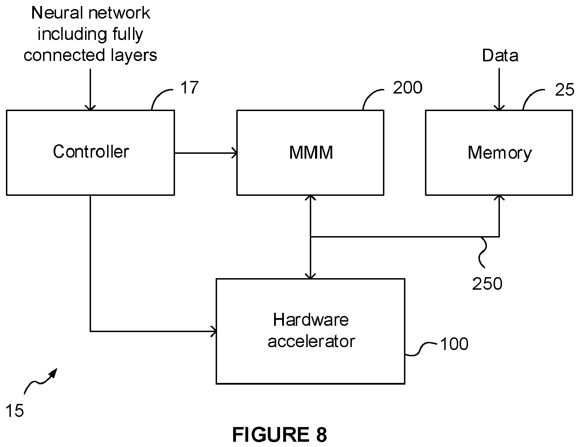

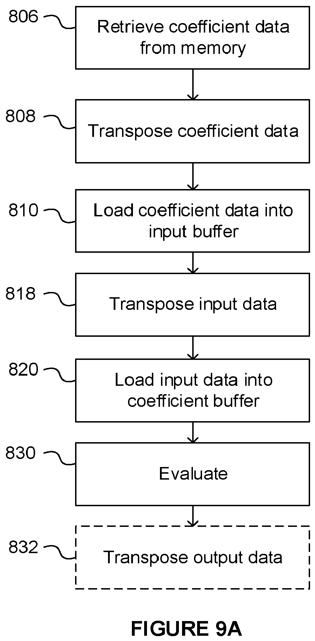

An alternative solution, according to a second aspect, will now be described, with reference to Figures 8, and 9A-9C. The inventors have recognised that, when processing a single batch of input data (B=1), although the weights are not reused with different input data elements, the input data elements are reused with different weights. That is, each input data element has multiple weights applied to it, in the evaluation of the FC layer. In a sense, the pattern is the exact opposite of the one that the previously described NNA hardware is optimised to accelerate. Based on this recognition, an embodiment of the second aspect implements the FC layer by interchanging the weights and input data. To do this, the vector-matrix multiplication

$$y = Wx$$

is rearranged as

$$y = \left( (Wx)^T \right)^T$$

$$y = \left( x^T W^T \right)^T$$

Here, the superscript "T" denotes the matrix transpose - that is the reordering of the dimensions to interchange the rows and columns (and therefore the interchange the height and width). For higher dimensional tensors, the same operation can be accomplished as a "permute" operation.

With this rearrangement, according to an embodiment of the second aspect, the weights (coefficients) are stored in the input buffer, and the input data is stored in the coefficient buffer. The coefficient buffer provides one set of input data elements concurrently to all of the processing elements. The input buffer provides each processing element with a respective different set of weights. In this way, in each cycle of the NNA hardware, the processing elements can partially calculate several of the output data elements in parallel. Each set of coefficients (weights) corresponds to part of a filter. The input buffer will be providing sets of coefficients for different filters, in parallel.

This approach can be used whether or not there is a batch dimension - that is, whether there are multiple batches or just one batch. When there is just one batch, the present embodiment may be preferred over the embodiments of the first aspect, described above, since embodiments of the first aspect only exploit parallelisation across different batches.

Figure 8 is a block diagram of a data processing system 15 according to an embodiment of the second aspect. The data processing system comprises a hardware accelerator 100; a memory 25; and a MMM 200, which are mutually connected via data bus 250. These components are identical to the corresponding components described above in connection with the first aspect, and will not be discussed further here, for brevity. The data processing system 15 also includes a controller 17, configured to receive a definition of a neural network and to control the hardware accelerator 100 and the MMM 200 to evaluate the layers of the neural network.

Figure 9A is a flowchart illustrating a method of implementing a fully connected layer, according to a first embodiment of the second aspect. In step 806, the MMM 200 retrieves coefficient data for the fully connected layer from the memory 25. In step 808, the MMM 200 applies a transpose operation to the retrieved coefficient data. (This forms the matrix $W^T$ in the equation above.) In step 810, the controller 17 controls the hardware accelerator 100 to load the transposed coefficient data into the input buffer 110 of the hardware accelerator 100. In step 818, the MMM 200 applies a transpose operation to the input data for the fully connected layer. (This forms the matrix $x^T$ in the equation above.) In step 820, the controller 17 controls the hardware accelerator 100 to load the transposed input data into the coefficient buffer 120 of the hardware accelerator 100. In step 830, the hardware accelerator 100 evaluates the fully connected layer, by means of its processing elements (convolution engines) 130. The convolution engines 130 operate in parallel. In each hardware cycle, they all receive the same set of input data elements from the coefficient buffer 120. But they each receive a different set of coefficients from the input buffer 110. These different sets of coefficients come from different filters - that is, they correspond to different output data elements of the fully connected layer. While one convolution engine 130-0 calculates a partial result for one filter, another convolution engine 130-1 calculates a partial result for another filter. These partial results are passed to the accumulation buffer 140, which accumulates them over multiple hardware cycles. In this way, over multiple hardware cycles, the hardware accelerator 100 evaluates the various filters of the fully connected layer in parallel.

If necessary, in step 832, the MMM 200 applies a transpose operation to the output data of the fully connected layer. This transpose operation returns the output data to the original format of the input data. This may be done if there are subsequent layers in the neural network other than fully connected layers - for example, if the output data of the fully connected layer is being used as input data for a subsequent convolutional layer. However, if the fully connected layer is the final layer of the neural network (as in the example of Figure 3D) then there may be no need to apply the additional transpose operation.

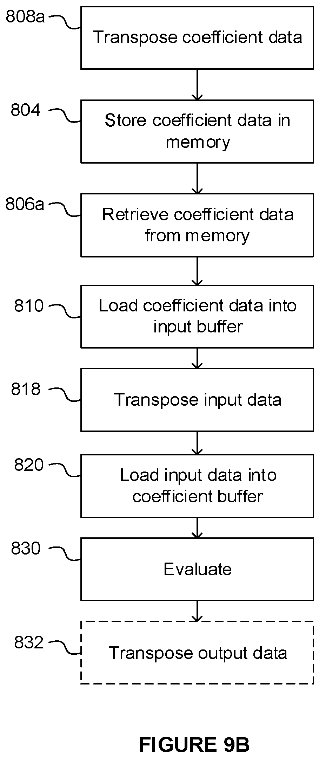

The flowchart of Figure 9B illustrates a method of implementing a fully connected layer according to a second embodiment of the second aspect. This embodiment differs from the first embodiment (Figure 9A) in that the transpose operation on the coefficients is carried out in advance. For example, it can be done as soon as the controller is provided with the definition of the neural network, before any evaluation of the layers begins. In detail: in step 808a, the MMM 200 applies the transpose operation to the coefficient data. In step 804, the MMM stores the transposed coefficient data in the memory 25. These steps are carried out ahead of runtime. Later, at runtime, MMM 200 retrieves the transposed coefficient data from the memory 25, in step 806a. Then, in step 810, the controller 17 controls the hardware accelerator 100 to load the transposed coefficient data into the input buffer. The method then proceeds as before, with steps 818, 820, 830 and (potentially) 832. By executing the transpose operation on the coefficient data in advance, and storing the transposed coefficient data in the memory 25 for later use, the method of the second embodiment can reduce the processing burden at runtime, when the fully connected layer is being evaluated.

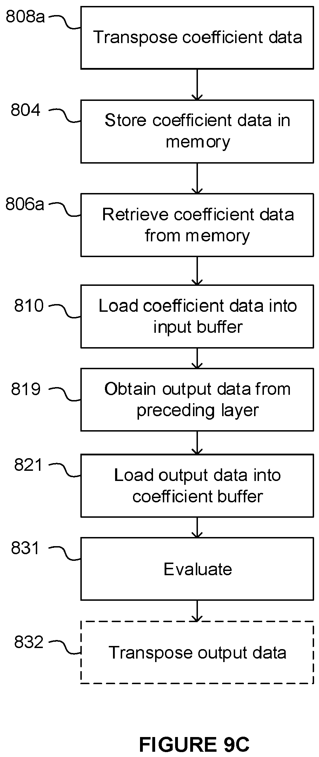

Figure 9C illustrates a method according to a third embodiment of the second aspect. This method is an extension of the method of Figure 9B, for a situation in which there are multiple consecutive fully connected layers. In this context, Figure 9C illustrates the evaluation of a second fully connected layer which takes, as its input data, the output data of a preceding first fully connected layer. Steps 808a, 804, 806a and 810 are the same as in the embodiment of Figure 9B. That is, the coefficient data for the second fully connected layer is transposed in advance and stored for later use in the memory 25. In step 819, the hardware accelerator 100 obtains the output data from the preceding (first) fully connected layer. Note that this is obtained without the transpose operation (step 832) being applied to the output data. In step 821, the controller 17 controls the hardware accelerator 100 to load the output data into the coefficient buffer 120, as input data for the second fully connected layer. In step 831, the hardware accelerator 100 evaluates the second fully connected layer, by means of the processing elements (convolution engines) 130. This evaluation proceeds in exactly the same way as the evaluation of the first fully connected layer. Finally, in step 832, the MMM 200 may apply a transpose operation to the output data of the second fully connected layer, as appropriate.

Similarly to the embodiments of the first aspect, it should be understood that it is not essential that a single hardware unit (MMM 200) performs all of the transpose operations. The different transpose operations could be provided by separate, dedicated transpose units, in other embodiments. Also, depending on the format(s) in which input/output data and coefficient data are stored, it is possible that some or all of the transpose operations may be unnecessary in some embodiments. Data and/or coefficients may be stored in a structure that has the dimensions already ordered in the required way. Independently of the need for transpose operations, some (additional) format conversion may be necessary if the internal data format used by the input buffer 110 differs from the internal data format used by the coefficient buffer 120. For example, if these buffers use a different number of bits to represent numerical values, then format conversions may be required before loading the coefficient data into the input buffer or loading the input data into the coefficient buffer, or both. Such format conversions may be handled by the MMM 200, or some other component of the data processing system 15.

In the embodiments of Figures 4 and 8, the data processing system was constructed around the hardware accelerator 100 - which, in those examples, was an NNA. However, the data processing system may instead be implemented partially or entirely within an NNA. For example, the hardware accelerator 100, the MMM 200, and the mapping unit 12 or control unit 17 may represent sub-components within an NNA.

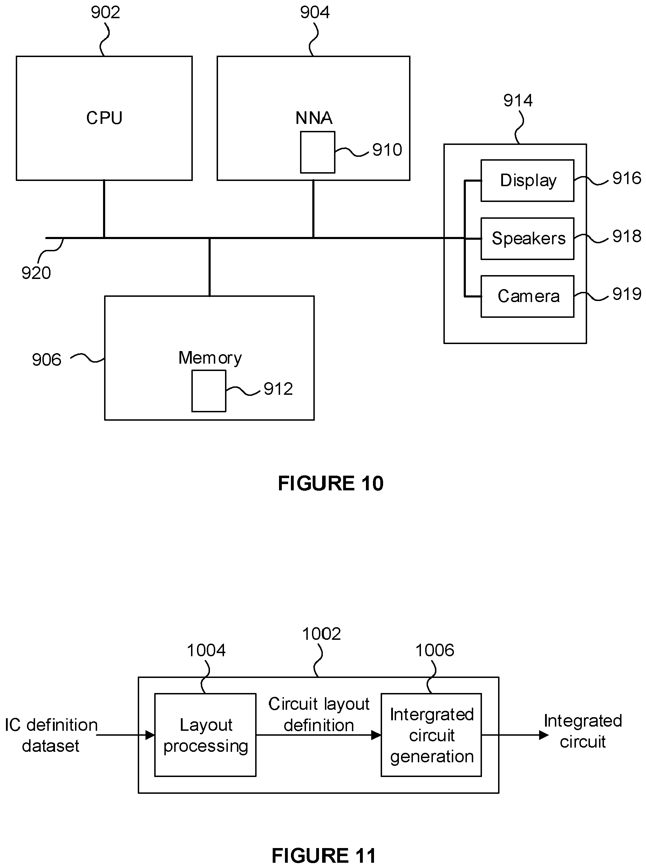

Figure 10 shows a computer system in which the data processing systems described herein may be implemented. The computer system comprises a CPU 902, an NNA 904, a memory 906 and other devices 914, such as a display 916, speakers 918 and a camera 919. A processing block 910 (corresponding to processing blocks 100, 200 and either 12 or 17) is implemented on the NNA 904. In other examples, the processing block 910 may be implemented on the CPU 902. The components of the computer system can communicate with each other via a communications bus 920 (corresponding to bus 250). A store 912 (corresponding to memory 25) is implemented as part of the memory 906.

While Fig. 9 illustrates one implementation of an NNA, it will be understood that a similar block diagram could be drawn for a graphics processing system - for example, by replacing either the CPU 902 or the NNA 904 with a graphics processing unit (GPU), or by adding the GPU as an additional unit. In such cases, the processing block 910 can be implemented in the GPU.

The data processing systems of Figures 4 and 8 are shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems and or NNAs described herein may be embodied in hardware on an integrated circuit. The data processing systems and/or NNAs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java® or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system (or NNA) configured to perform any of the methods described herein, or to manufacture a data processing system (or NNA) comprising any apparatus described herein. An integrated circuit definition dataset may be, for example, an integrated circuit description.

Therefore, there may be provided a method of manufacturing, at an integrated circuit manufacturing system, a data processing system (or NNA) as described herein. Furthermore, there may be provided an integrated circuit definition dataset that, when processed in an integrated circuit manufacturing system, causes the method of manufacturing a data processing system (or NNA) to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a data processing system (or NNA) will now be described with respect to Figure 11.

Figure 11 shows an example of an integrated circuit (IC) manufacturing system 1002 which is configured to manufacture a data processing system (or NNA) as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a data processing system or NNA as described in any of the examples herein), process the IC definition dataset, and generate an IC according to the IC definition dataset (e.g. which embodies a data processing system or NNA as described in any of the examples herein). The processing of the IC definition dataset configures the IC manufacturing system 1002 to manufacture an integrated circuit embodying a data processing system (or NNA) as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a data processing system (or NNA) without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 11 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 11, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of implementing in hardware a fully connected layer of a neural network, the hardware comprising:

   a plurality of processing elements (130), each configured to multiply a set of one or more input data values and a set of one or more coefficients, in each cycle of a plurality of hardware cycles;
   a coefficient buffer (120), configured to supply, in each cycle, a single set of one or more coefficients to all of the processing elements;
an input buffer (110), configured to supply, in each cycle, to each processing element a respective set of one or more input data elements, the method comprising:

loading (820) input data for the fully connected layer into the coefficient buffer;
loading (810) coefficient data for the fully connected layer into the input buffer; and
evaluating (830) the fully connected layer using the plurality of processing elements (130), wherein, in each cycle, a first processing element (130-0) partially evaluates a first output data element of the fully connected layer while a second processing element (130-1) partially evaluates a second output data element of the fully connected layer.

2. The method of claim 1, further comprising, before loading (810) the coefficient data into the input buffer, applying a transpose (808) operation to the coefficient data to produce transposed coefficient data.

3. The method of claim 2, wherein the coefficient data is stored in a memory, and the method comprises:

retrieving (806) the coefficient data from the memory;
applying the transpose operation (808) to the retrieved coefficient data; and
loading (810) the transposed coefficient data into the input buffer.

4. The method of claim 2, comprising:

obtaining the coefficient data;
applying the transpose operation (808a) to the coefficient data;
storing (804) the transposed coefficient data in a memory;
retrieving (806a) the transposed coefficient data from the memory; and
loading (810) the transposed coefficient data into the input buffer.

5. The method of any one of claims 1-4, wherein the fully connected layer is a first fully connected layer and the neural network further comprises a second fully connected layer, the method further comprising:

loading (821) output data of the first fully connected layer into the coefficient buffer, as input data for the second fully connected layer;
loading (810) coefficient data for the second fully connected layer into the input buffer; and
evaluating (831) the second fully connected layer using the plurality of processing elements.

6. The method of any one of the preceding claims, wherein the input data for the fully connected layer consists of a single batch of input data.

7. A data processing system (15) for implementing one or more fully connected layers of a neural network, the data processing system comprising:

a hardware accelerator (100); and
a controller (17),
wherein the hardware accelerator (100) comprises:

a plurality of processing elements (130), each configured to multiply a set of one or more input data values and a set of one or more coefficients, in each cycle of a plurality of hardware cycles;
a coefficient buffer (120), configured to supply, in each cycle, a single set of one or more coefficients to all of the processing elements (130); and
an input buffer (110), configured to supply, in each cycle, to each processing element (130) a respective set of one or more input data elements,

wherein the controller (17) is configured to:

load (820) input data for the fully connected layer into the coefficient buffer; and
load (810) coefficient data for the fully connected layer into the input buffer,

and wherein the hardware accelerator (100) is configured to evaluate (830) the fully connected layer using the plurality of processing elements (130), wherein, in each cycle, a first processing element (130-0) partially evaluates a first output data element of the fully connected layer while a second processing element (130-1) partially evaluates a second output data element of the fully connected layer.

8. The data processing system of claim 7, further comprising a transpose unit (200), configured to apply a transpose operation (808) to the coefficient data before it is loaded into the input buffer (110).

9. The data processing system of claim 8, wherein the transpose unit (200) is configured to:

retrieve (806) the coefficient data from a memory;
apply the transpose operation (808) to the retrieved coefficient data; and

supply the transposed coefficient data to the input buffer (110).

10. The data processing system of claim 8, wherein the transpose unit is configured to:

obtain the coefficient data;
apply the transpose operation (808a) to the coefficient data;
store (804) the transposed coefficient data in a memory;
retrieve (806a) the transposed coefficient data from the memory; and
supply the transposed coefficient data to the input buffer (110).

11. The data processing system of any one of claims 8-10, comprising a memory manipulation module (200), for manipulating data stored in a memory (25), wherein the memory manipulation module is configured to perform the functions of the transpose unit, wherein the memory manipulation module comprises:

an internal buffer (210);
a memory reading block (220), configured to read data from the memory and write the data to the internal buffer (200);
a memory writing block (230), configured to read the data from the internal buffer (210) and write the data to the memory (205); and
a control channel (240) between the memory reading block (220) and the memory writing block (230), wherein the memory reading block and the memory writing block are configured to communicate via the control channel (240) to maintain synchronisation between them when writing the data to the internal buffer and reading the data from the internal buffer, respectively.

12. The data processing system of any one of claims 7-11, wherein each processing element comprises:

a plurality of elements of multiply logic (132), each configured to multiply a weight by an input data element, and
a plurality of elements of addition logic (134), configured in a tree structure to sum the outputs of the elements of multiply logic (132).

13. A method of manufacturing, using an integrated circuit manufacturing system, a data processing system as claimed in any of claims 7 to 12.

14. An integrated circuit definition dataset that, when processed in an integrated circuit manufacturing system, configures the integrated circuit manufacturing system to manufacture a data processing system as claimed in any of claims 7 to 12.

15. An integrated circuit manufacturing system configured to manufacture a data processing system as claimed in any of claims 7 to 12.

FIGURE 1A

FIGURE 1B

**FIGURE 2A**

**FIGURE 2B**

FIGURE 2C

FIGURE 2D

**FIGURE 2E**

**FIGURE 2F**

```
Input ──→ ┌─────────┐   ┌─────┐   ┌─────────┐
          │ Batch to│──→│ RNN │──→│ Space to│──→ Output
          │ space   │   │     │   │ batch   │
          └─────────┘   └─────┘   └─────────┘
```

**FIGURE 3A**

```
Input ──→ ┌─────────┐   ┌─────┐   ┌─────────┐
          │ Batch to│──→│ MLP │──→│ Space to│──→ Output
          │ space   │   │     │   │ batch   │
          └─────────┘   └─────┘   └─────────┘
```

**FIGURE 3B**

```
Input ─→ ┌──────────────┐  ┌─────────┐  ┌───────────┐  ┌─────────┐
         │ Convolutional│─→│ Batch to│─→│ Fully-    │─→│ Space to│─→ Output
         │ layers       │  │ space   │  │ connected │  │ batch   │
         └──────────────┘  └─────────┘  │ layers    │  └─────────┘
                                        └───────────┘
```

**FIGURE 3C**

```
Input ─→ ┌──────────────┐  ┌─────────┐  ┌───────────┐
         │ Convolutional│─→│ Batch to│─→│ Fully-    │─→ Output
         │ layers       │  │ space   │  │ connected │
         └──────────────┘  └─────────┘  │ layers    │
                                        └───────────┘
```

**FIGURE 3D**

**FIGURE 4**

FIGURE 5A

**FIGURE 5B**

200

## Memory Manipulation Module

220

210

230

Internal Buffer

Memory Reading Block

Memory Writing Block

Control Channel

240

Memory

25

250

**FIGURE 6**

710 — Map each FC layer to
an equivalent
convolutional layer

712 — Estimate cost of evaluating
each FC layer directly

714 — Estimate cost of evaluating
using transformation

Yes        Cheaper to        No
transform?

716

720 — Obtain input data

730 — Transform input data
(batch to space)

740 — Evaluate equivalent layers

Evaluate FC layers directly

741

750 — Inverse transform output
data (space to batch)

**FIGURE 7**

Neural network
including fully
connected layers

Data

| Controller | 17 | MMM | 200 | Memory | 25 |

Hardware
accelerator
100

250

15

**FIGURE 8**

806 — Retrieve coefficient data
from memory

808 — Transpose coefficient data

810 — Load coefficient data into
input buffer

818 — Transpose input data

820 — Load input data into
coefficient buffer

830 — Evaluate

832 — Transpose output data

**FIGURE 9A**

808a → Transpose coefficient data

804 → Store coefficient data in memory

806a → Retrieve coefficient data from memory

810 → Load coefficient data into input buffer

818 → Transpose input data

820 → Load input data into coefficient buffer

830 → Evaluate

832 → Transpose output data

**FIGURE 9B**

808a — Transpose coefficient data

804 — Store coefficient data in memory

806a — Retrieve coefficient data from memory

810 — Load coefficient data into input buffer

819 — Obtain output data from preceding layer

821 — Load output data into coefficient buffer

831 — Evaluate

832 — Transpose output data

**FIGURE 9C**

902

904

914

CPU

NNA

910

Display ⌐ 916

Speakers ⌐ 918

Camera ⌐ 919

920

906

Memory

912

## FIGURE 10

1004

1002

1006

IC definition
dataset

Layout
processing

Circuit layout
definition

Intergrated
circuit
generation

Integrated
circuit

## FIGURE 11

Europäisches
Patentamt

European
Patent Office

Office européen
des brevets

# EUROPEAN SEARCH REPORT

**Application Number**

EP 22 15 0119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 153 996 A2 (ALTERA CORP [US]) 12 April 2017 (2017-04-12) | 1-10, 12-15 | INV. G06N3/063 |
| Y | * paragraph [0012] – paragraph [0097]; figures 1,4,6,8,9,10 * | 11 | G06N3/04 |
| A | US 2020/356837 A1 (HARGIL ASAF [IL] ET AL) 12 November 2020 (2020-11-12) * paragraph [0008]; paragraph [0025] – paragraph [0087]; figure 6 * | 1-15 | |
| Y | GB 2 582 868 A (IMAGINATION TECH LTD [GB]) 7 October 2020 (2020-10-07) | 11 | |
| A | * page 4 – page 22; figure 3 * | 1-10, 12-15 | |
| X | EP 3 330 898 A1 (ALTERA CORP [US]) 6 June 2018 (2018-06-06) | 1-10, 12-15 | |
| Y | * paragraph [0005] – paragraph [0012]; paragraph [0015] – paragraph [0122]; figures 1,4,8,10A,10B,11A,11B,15,16 * | 11 | |

**TECHNICAL FIELDS SEARCHED (IPC)**

G06N

The present search report has been drawn up for all claims

| Place of search | Date of completion of the search | Examiner |
|---|---|---|
| The Hague | 31 May 2022 | Klasen, TJ |

EPO FORM 1503 03.82 (P04C01)

## ANNEX TO THE EUROPEAN SEARCH REPORT
## ON EUROPEAN PATENT APPLICATION NO.

EP 22 15 0119

This annex lists the patent family members relating to the patent documents cited in  the above-mentioned European search report.
The members are as contained in the European Patent Office EDP file on
The European Patent Office is in no way liable for these particulars which are merely given for the purpose of information.

31-05-2022

| Patent document cited in search report | | Publication date | Patent family member(s) | | Publication date |
|---|---|---|---|---|---|
| EP 3153996 | A2 | 12-04-2017 | CN | 107025317 A | 08-08-2017 |
| | | | EP | 3153996 A2 | 12-04-2017 |
| | | | US | 2017103299 A1 | 13-04-2017 |
| | | | US | 2020193267 A1 | 18-06-2020 |
| US 2020356837 | A1 | 12-11-2020 | NONE | | |
| GB 2582868 | A | 07-10-2020 | NONE | | |
| EP 3330898 | A1 | 06-06-2018 | CN | 108133265 A | 08-06-2018 |
| | | | EP | 3330898 A1 | 06-06-2018 |

EPO FORM P0459

For more details about this annex : see Official Journal of the European Patent Office, No. 12/82